# EUROPEAN PATENT SPECIFICATION

(11) **EP 4 148 469 B1**
(45) Date of publication and mention of the grant of the patent: **20.08.2025**
(21) Application number: 21196528.0
(22) Date of filing: 14.09.2021
(51) Int. Cl.: G01N 21/77, G02B 6/122, B01L 3/00, G02B 6/293

(54) **PHOTONIC CRYSTAL-BASED SENSOR**
SENSOR AUF GRUNDLAGE EINES PHOTONISCHEN KRISTALLS
CAPTEUR À BASE DE CRISTAL PHOTONIQUE

(43) Date of publication of application: 15.03.2023
(73) Proprietor: Cambridge Enterprise, Ltd., Cambridge Cambridgeshire CB2 1TN (GB); Hitachi, Ltd., Tokyo 100-8280 (JP)
(72) Inventor: BROSSARD, Frederic, Cambridge, CB3 0HE (GB); FRUK, Ljiljana, Cambridge, CB3 0AS (GB)
(74) Representative: Piotrowicz, Pawel Jan Andrzej

(56) References cited:
- EP-A1- 3 333 605
- US-A1- 2014 140 655
- RYCKMAN J D ET AL: "Localized Field Enhancements in Guided and Defect Modes of a Periodic Slot Waveguide", IEEE PHOTONICS JOURNAL, IEEE, USA, vol. 3, no. 6, December 2011 (2011-12-01), pages 986 - 995, XP011485143, ISSN: 1943-0655, DOI: 10.1109/JPHOT.2011.2170966
- ASGHARI AREF ET AL: "Fast, accurate, point-of-care COVID-19 pandemic diagnosis enabled through advanced lab-on-chip optical biosensors: Opportunities and challenges", APPLIED PHYSICS REVIEWS, AMERICAN INSTITUTE OF PHYSICS, 2 HUNTINGTON QUADRANGLE, MELVILLE, NY 11747, vol. 8, no. 3, 7 September 2021 (2021-09-07), XP012259340, DOI: 10.1063/5.0022211
- AMIT KUMAR GOYAL ET AL: "Recent advances and progress in photonic crystal-based gas sensors", JOURNAL OF PHYSICS D: APPLIED PHYSICS, INSTITUTE OF PHYSICS PUBLISHING, BRISTOL, GB, vol. 50, no. 20, 24 April 2017 (2017-04-24), pages 203001, XP020316365, ISSN: 0022-3727, [retrieved on 20170424], DOI: 10.1088/1361-6463/AA68D3
- CHAKRAVARTY SWAPNAJIT ET AL: "Review of design principles of 2D photonic crystal microcavity biosensors in silicon and their applications", FRONTIERS OF OPTOELECTRONICS, HIGHER EDUCATION PRESS, HEIDELBERG, vol. 9, no. 2, 9 April 2016 (2016-04-09), pages 206 - 224, XP035662994, ISSN: 2095-2759, [retrieved on 20160409], DOI: 10.1007/S12200-016-0631-2

## Description

### Field

The present invention relates to a photonic crystal-based sensor for particular, but exclusive use in biosensing.

### Background

Many commonly-used biosensing technologies, such as enzyme-linked immunosorbent assay (ELISA), employ fluorescent labelling (or "tagging") of specific biomolecules, such as antibodies. This is usually performed in the laboratory by specialists and is labour-intensive and costly. The ability to tag and track biological markers outside of the laboratory by non-specialists is of great interest, particularly if testing can be performed quickly and reliably at point-of-care.

Biosensing integrated circuits (sometimes referred to as a "lab-on-a-chip" devices) offer the possibly of performing accurate, high-throughput testing. Some of these devices use photonic crystal cavities and have demonstrated great sensitivity to small changes in their environment, thereby allowing the possibility of label-free, on-chip biosensing. An example of such a device is described in M.G. Scullion, A. Di Falco, T.F. Krauss: "Slotted photonic crystal cavities with integrated microfluidics for biosensing applications", Biosensors and Bioelectronics, volume 27, pages 101 to 105 (2011), which is incorporated herein by reference.

Biosensing with photonic devices involves immobilising probe molecules on the surface of a photonic sensor and specifically binding these molecules to target analytes. The photonic cavity is usually integrated with a microfluidic channel to bind the probes to the cavity.

One type of probe is carried through the channel, thus enabling to detect one type of analyte at a time per channel. Microfluidics channels are, however, typically several hundreds of micrometres wide which limits minimum separation between consecutive cavities and, thus, the multiplexing capability of the sensor.

Another approach employs inkjet printing to circumvent the need for globally depositing probe molecules. The use of large inkjet droplets having a diameter of the order of tens of micrometres helps to ensure coverage of a micrometre-sized photonic cavity. Large inkjet droplets are, however, known to suffer from the so-called "coffeering effect" resulting in a concentration of solutes around the edge of the droplet, away from the photonic cavity. Smaller droplets, having a diameter of the order of micrometres, are less affected by this effect and so would seem to offer a solution. Aligning a smaller droplet to a photonic crystal cavity of the same size is more difficult which is slower and requires higher fabrication tolerances.

Ryckman J D et al.: "Localized Field Enhancements in Guided and Defect Modes of a Periodic Slot Waveguide", IEEE Photonics Journal, vol. 3, no. 6, December 2011 (2011-12), pages 986-995, describes a periodic slot waveguide which has a structure based on a slot waveguide with 1-D periodic holes.

Asghari Aref et al: "Fast, accurate, point-of-care COVID-19 pandemic diagnosis enabled through advanced lab-on-chip optical biosensors: Opportunities and challenges", Applied Physics Reviews, vol. 8, no. 3, 7 September 2021 (2021-09-07), describes lab-on-chip platforms suitable for virion detection, particularly integrated optical biosensors, plasmonic optical biosensors, and graphene-based optical biosensors. Microcavity photonic crystal (PhC) sensors are described, which use 2D PhC biosensors comprising different sensor spots over a plurality of parallel waveguides, which are coupled to respective photonic crystal microcavities.

EP 3 333 605 A1 describes a method of fabricating a photonic device. The method comprises providing a photonic crystal layer having a principal surface and an array of optical scatterers, for example holes extending into the photonic crystal or pillars extending from the principal surface, and forming, over a region of the photonic crystal layer containing at least one optical scatterer, a layer of material on the principle surface of the photonic crystal layer by inkjet printing.

Amit Kumar Goyal et al.: "Recent advances and progress in photonic crystal-based gas sensors", Journal Of Physics D: Applied Physics, vol. 50, no. 20, 24 April 2017 (2017-04-24), page 203001, describes 1D and 2D photonic crystal structures including photonic crystal waveguides and cavities for gas sensing applications.

US 2014/140655 A1 describes packaged chips for multiplexing photonic crystal microcavity waveguide and photonic crystal slot waveguide devices. The packaged chips comprise crossing waveguides to prevent leakage of fluids from the microfluidic channels from the trenches or voids around the light guiding waveguides.

### Summary

The present invention is defined in claims 1, 4 and 15.

According to a first aspect of the present invention there is provided a photonic crystal-based sensor. The sensor comprises a photonic waveguide comprising a photonic crystal comprising holes in a layer of dielectric material and a waveguide formed by absences of holes in the photonic crystal. The sensor comprises at least one strip of biomolecules disposed on, running across, and spaced apart along, the photonic crystal waveguide so as to form respective strip cavities along the photonic crystal waveguide. Each strip includes a respective layer of material for sensing presence of a respective analyte, for example, by specifically binding to a given analyte, such as an antibody. The sensor further comprises a slot running along (for example, along the middle of) the waveguide of the photonic crystal waveguide.

The slot can increase sensitivity and/or quality factor of the cavities. The strips can be formed by inkjet printing using femtolitre droplets and so the arrangement of the sensor helps avoid the need for reproducibly aligning a micrometre-sized droplet with a similarly-sized photonic crystal cavity, thereby relaxing fabrication tolerances and, thus, making the device easier to fabricate.

The slot may have different widths along the first photonic waveguide.

The sensor may comprise a second photonic crystal waveguide running along the first photonic waveguide (for instance along a side of the first photonic waveguide and so sharing a common portion of the photonic crystal portion) and arranged such that the strip cavities are coupled to the second photonic crystal waveguide.

The sensor is preferably a biosensor.

The holes may have a diameter between a half to three-quarters of the lattice spacing. Preferably, the holes have a diameter of about 0.6 times the lattice spacing. The diameter may be between 150 nm and 450 nm.

The layer of dielectric material has a principal surface (such as, a top surface) and the holes may extend into the dielectric material. The strip(s) lies/lie on the principal surface and preferably lie directly on the principal surface. A strip may partially or fully infiltrate holes. A strip may form respective suspended membranes over holes. The principal surface is preferably flat.

The dielectric material preferably has a refractive index greater than 2. The dielectric material may be silicon or silicon nitride. The photonic crystal may have a lattice between 300 nm and 600 nm. Holes in the photonic crystal may have a diameter of between a half and three-quarters of the lattice spacing. The dielectric material layer may have a thickness of between a quarter of the lattice spacing and three-quarters of the lattice spacing, for example, about half the lattice spacing. The sensor may comprise a bottom cladding (i.e., under the dielectric material layer). The bottom cladding may comprise an oxide layer, such as silicon dioxide. The bottom cladding may be air. The sensor may comprise an upper cladding. The upper cladding layer may comprise an oxide layer, such as silicon dioxide, which may have a thickness less than 100 nm.

According to a second aspect of the present invention there is provided a photonic crystal-based sensor. The sensor comprises a first photonic waveguide comprising a photonic crystal comprising holes in a layer of dielectric material and a waveguide formed by absences of holes in the photonic crystal. The sensor comprises a series of strips of biomolecules disposed on, running across, and spaced apart along, the first photonic crystal waveguide so as to form respective strip cavities along the first photonic crystal waveguide. Each strip includes a respective layer of material for sensing presence of a respective analyte, for example, by specifically binding to a given analyte, such as an antibody. The sensor comprises a second photonic crystal waveguide running along the first photonic waveguide (for instance along a side of the first photonic waveguide and so sharing a common portion of the photonic crystal portion) and arranged such that the strip cavities are coupled to the second photonic crystal waveguide.

The second photonic crystal waveguide may run along one side of the first photonic crystal waveguide (in other words be co-planar) and the first and second photonic crystal waveguides may share a common photonic crystal portion. The second photonic crystal waveguide may run under the first photonic crystal.

The sensor may further comprise a first coupler (for example in the form of a grating) arranged at a first end of the second photonic crystal waveguide for coupling light from an external source into the second photonic crystal waveguide, and a second coupler (for example in the form of a grating) arranged at a second end of the second photonic crystal waveguide for coupling light out of the second photonic crystal waveguide to an external detector.

The sensor may further comprise a first transition region interposed between the first coupler and the first end of the second photonic crystal and a second transition region interposed between the second end of the second photonic crystal and the second coupler. The first and second transition regions may be arranged to improve coupling into and out of the second photonic waveguide and/or reduce back reflections. The first and second transition regions comprises third and fourth photonic waveguide respectively. Holes in the third and fourth photonic crystals may increase size between a coupler and the second photonic waveguide.

The slot may have different widths along the first photonic waveguide. Different widths of slot along the first photonic waveguide can help to provide cavities with different resonant frequencies. The slot may be tapered to provide a slot with different widths.

The first photonic crystal waveguide may be an unslotted photonic crystal waveguide (in other words, there is no slot running along the waveguide).

The waveguide may have different widths (for example, the distance between inside edge of holes either side of the waveguide) along the first photonic crystal waveguide.

On one side of first photonic crystal waveguide, the photonic crystal may be broken into at least two sections, separated by at least one gap (in other words, two sections are separated by a respective gap).

Each strip may have a thickness of one monolayer. Each strip may have a respective thickness of between one and ten monolayers, particularly if the first photonic crystal waveguide is a slotted photonic crystal waveguide. The strip may comprise a bi-layer. The strip may comprise a single layer of probe molecules. The probe layer may be a biosensing layer or a chemical sensing layer.

Each strip may have a respective thickness of between 10 and 100 nm, particularly if the first photonic crystal waveguide is an unslotted photonic crystal waveguide. Each strip may comprise a first layer (of "bio-compatible layer") for creating a respective cavity and a second layer disposed on the first layer, wherein the second layer is the layer of material for sensing presence of a respective analyte. Thus, a slot need not be used which can facilitate fabrication and/or avoid the need for infiltrating the slot.

According to a third aspect of the present invention there is provided a testing device as defined in claim 14 comprising an array of the sensors supported on a common substrate and a microfluidic structure for delivering a fluidic sample to the sensors.

According to a fourth aspect of the present invention there is provided a method of forming a sensor. The method comprises providing a template device, the template device comprising a photonic crystal waveguide comprising a photonic crystal comprising holes in a layer of dielectric material and a waveguide formed by absences of holes in the photonic crystal, and a slot running along (for example, along the middle of) the waveguide of the photonic crystal waveguide. The method comprises printing at least one strip of biomolecules on the photonic crystal waveguide, spaced apart along, and running across the photonic crystal waveguide so as to form respective strip cavities, each strip including a respective layer of material for sensing presence of a respective analyte.

Preferably, the printing the at least one strip comprises high-resolution inkjet printing of at least one layer. Printing the at least one strip may comprise high-resolution inkjet printing one layer. Printing the at least one strip may comprise high-resolution inkjet printing of two layers. The layer or uppermost layer preferably comprises a probe layer. The strip may comprise a bi-layer. The strip may comprise a single layer of probe molecules. The probe layer may be a biosensing layer or a chemical sensing layer. The method may comprise removing the at least one strip (or layer in a strip) and printing at least one new strip (or layer in a strip).

According to a fifth aspect of the present invention there is provided a method of using a sensor according to claim 16, the method comprising exposing a fluid sample to the sensor or the testing device.

Furthermore, there is described a method which includes creating a cavity on top of a photonic crystal waveguide with inkjet-printed solutions containing either the probes used for sensing or a biomaterial to which the probes preferably bind. In one embodiment, a bio-cavity is directly created from the probe forming a thin layer of organic material covalently bound to the surface of a slotted photonic crystal waveguide. In other embodiment, a bio-cavity is formed from a thicker layer of organic material on the surface of a photonic crystal waveguide and functionalised by inkjet-printed probes covalently bound to the organic material. The organic material can be removed, thus allowing the possibility of re-using the photonic crystal waveguide template with different probes.

A method and device are herein described for optically sensing a high density of different analytes on a chip in a high-throughput manner without the need for fluorescent tags. This can be achieved by patterning biological probes or organic materials on a photonic crystal template using inkjet printing. Optical cavities can be formed in this step, with each cavity arranged to have its own characteristic resonance wavelength. Each cavity can contain a unique probe which specifically binds to a target analyte. A binding event can cause a shift of the resonance wavelength of the corresponding cavity thus enabling identification of the analyte.

A multiplexed photonic biosensor can be formed by creating an array of such cavities along a photonic crystal waveguide. The multiplex sensor is side connected to another photonic crystal waveguide carrying a light source which couples to all cavities of the sensor, resulting in characteristic dips in the transmission spectra of the light guiding waveguide. A probe-to-target analyte binding event can cause a spectral shift of the dip in the transmission spectra associated to a shift of the resonance wavelength of the corresponding cavity, thus enabling to identify analytes in a solution.

In one embodiment, a strip of probe biomolecules is patterned (or "formed") across a slotted photonic crystal waveguide with high-resolution inkjet printing. The thin strip of organic material created by the monolayer of biomolecules bound to the surface of the photonic crystal can form a cavity at the intersection of the strip and slotted photonic crystal waveguide due to the locally increased refractive index of the waveguide. The presence of the air slot can greatly increase sensitivity and the quality of the cavity. The slot is preferably tapered along the waveguide which, upon patterning with the strips, provides cavities with different resonance wavelengths to produce a multiplex biosensor.

In another embodiment, a strip of organic material, such as a bio-compatible polymer, is first printed on a photonic crystal waveguide without a slot. The strip is significantly thicker than a monolayer of probe molecules and, as a result, does not necessarily require the presence of a slot to create a high-quality cavity. The cavity is formed at an intersection of the strip and the photonic crystal waveguide by a local increase of the refractive index of the waveguide at the intersection. The thickness of the strip can be controlled by the concentration of the bio-compatible polymer in the printed solution or by the number of printer passes overlapping the strip. The strip thickness controls the resonance wavelength of the cavity created in this way thus creating the basis for a multiplex biosensor, but the multiplexing capability can also be obtained from a geometrical variation of the photonic crystal waveguide. Following this step, a strip of probe biomolecules is printed on the bio-compatible polymer with a unique probe covalently bound to each polymer cavity. The probes covalently bind to the polymer which is not covalently bound to the surface of the chip, thus the cavities and therefore the probes can be removed, and the chip re-used with new probes.

Microfluidics can be incorporated with the biosensors to bring the target analytes in close contact with the probes on the photonic crystal surface. The light-guiding photonic crystal waveguide enables monitoring of changes in resonance wavelength of the cavities. In another configuration, a sample can be dipped in a solution containing all target analytes or such solution can be printed on the probe cavities, resulting in a change of the resonance wavelength following incubation and washing. This configuration does not require microfluidics and results in an end point reading and is suited to fast diagnostic of biological fluids.

Devices are herein described for a highly multiplexed biosensor with high sensitivity where cavities are created on demand during the deposition of biomolecules or biomaterials on the surface of a photonic crystal template. Bio-solutions can be locally deposited using high resolution electrohydrodynamic inkjet printing, thus helping to minimize usage of microfluidics and the volume of reagents consumed. Minimal alignment is required and allows matching of surface coverage between the probe and the cavity to create a label-free biosensor. It offers the possibility to re-use the template to create new cavities and pattern fresh probes.

### Brief Description of the Drawings

Certain embodiments of the present invention will now be described, by way of example, with reference to the accompanying drawings, in which:
Figure 1 is a schematic plan view of a first microphotonic device which comprises a hole-based photonic crystal waveguide and a slot (a "slotted photonic crystal waveguide") and a strip of material running over the photonic crystal forming a strip cavity;
Figure 2 is a cross-sectional view of the first microphotonic device shown in Figure 1 taken along the line A-A';
Figure 3 is a cross-sectional view of the first microphotonic device shown in Figure 1 taken along the line B-B';
Figure 4 is a schematic plan view of a second microphotonic device which comprises a hole-based photonic crystal waveguide without a slot (an "unslotted photonic waveguide") and a strip of material running over the photonic crystal forming a strip cavity;
Figure 5 is a cross-sectional view of the second microphotonic device shown in Figure 4 taken along the line C-C';
Figure 6 is a cross-sectional view of the second microphotonic device shown in Figure 4 taken along the line D-D';
Figures 7A to 7C illustrate calculated cavity mode distributions for an unslotted photonic waveguide and overlying strips having thicknesses of 10 nm, 20 nm and 30 nm respectively;
Figure 8 shows line plots of calculated quality factor Q and mode volumes of a function of strip thickness for the unslotted photonic waveguide shown in Figures 7A to 7C;
Figures 9A to 9C illustrate calculated cavity mode distributions for a slotted photonic waveguide and overlying strips having thicknesses of 10 nm, 20 nm and 30 nm respectively;
Figure 10 shows line plots of calculated quality factor Q and mode volumes as a function of strip thickness for the slotted photonic waveguide shown in Figures 9A to 9C;
Figure 11A shows a line plot of resonant wavelength as a function of refractive index of material used in a 10 nm-thick strip for a slotted photonic crystal waveguide;
Figure 11B shows a line plot of resonant wavelength as a function of refractive index of material used in a 10 nm-thick strip for an unslotted photonic crystal waveguide;
Figure 11C shows a line plot of resonant wavelength as a function of refractive index of aqueous solution lying over a slotted photonic crystal waveguide having a 10 nm-thick strip of material;
Figure 12 is a schematic plan view of a multiplexed biosensor which integrates a slotted photonic crystal waveguide, three strip cavities disposed at different positions along the waveguide comprising different bio-probe molecules and having different corresponding resonances;
Figure 13 is a schematic cross-sectional view taken along the line G-G' in Figure 12 showing a layer of bio-probe molecules before and after attachment of target molecules and showing a shift Δλ in resonant wavelength λ;
Figure 14 is a dispersion diagram of a slotted photonic crystal waveguide having a waveguide width w = 1.2*a* (where *a* is the photonic lattice constant) showing mode profile of first, second and third bands A, B and D at k = 0.5 and of an unslotted photonic waveguide crystal having a waveguide with of w= 0.9*a* showing a mode profile of a fourth band C;
Figures 15A to 15C illustrate calculated cavity mode distributions for slotted photonic waveguides each having a strip thickness of 10 nm and having slot widths of 100 nm, 80 nm and 60 nm respectively;
Figure 16 shows line plots of calculated quality factor Q and mode volumes of a function of slot width for the slotted photonic waveguides shown Figures 15A to 15C;
Figure 17 is a schematic block diagram of a device comprising an optical splitter, a plurality of multiple multiplexed biosensors having strip cavities, an integrated microfluidic device for presenting analytes to the biosensors, and optical output;
Figure 18 is a schematic diagram illustrating an arrangement of optical splitter, microfluidic device and biosensors;
Figure 19A is a fluorescence signal obtained from a sample comprising a silicon substrate having a surface silicon dioxide layer on which single-strand DNA is printed with an electrohydrodynamic inkjet printer forming an array of sub-5 µm microdots;
Figure 19B is a fluorescence signal obtained from a sample comprising a silicon substrate having a surface silicon dioxide layer on which hybridized-strand DNA is printed with an electrohydrodynamic inkjet printer forming an array of sub-5 µm microdots;
Figure 20 is a schematic plan view of a multiplexed biosensor which integrates an unslotted photonic crystal waveguide, three strip cavities disposed at different positions along the waveguide comprising different bio-probe molecules and having different corresponding resonances;
Figure 21 is a schematic cross-sectional view taken along the line H-H' in Figure 20 showing a layer of bio-probe molecules before and after attachment of target molecules and showing a shift Δλ in resonant wavelength λ; and
Figure 22 is a dispersion diagram of an unslotted photonic crystal waveguide with width w between 0.97*a* and 1.0*a* (where *a* is the photonic lattice constant).

### Detailed Description of Certain Embodiments

In the following like parts are denoted by like reference numbers.

Devices and methods herein described can be used in applications involving detection of biological molecules (or "biomolecules"), for example DNA, RNA and proteins such as antibodies and enzymes, without the need for fluorescent labels. The devices and methods herein described involve creating one or more cavities by depositing localised layers (or "strips") of bio-probes or bio-polymer on the surface of a photonic crystal template and arranging for each cavity to a specific resonance wavelength to form a multiplexed biosensor.

A photonic crystal template (or simply a "photonic crystal") herein described comprises of a triangular lattice of etched holes in an inorganic, non-toxic material layer with a sufficiently high refractive index, preferably greater than 2, such as silicon or silicon nitride. The lattice spacing *a* is usually on the order of the emission wavelength of a cavity, for example, between 300 nm and 600 nm. The lattice spacing *a* depends on the refractive index of the template material and whether biosensor cavities emit in the visible or near-infrared part of the spectra. The hole size *Ø* (*i.e*., hole diameter) is usually between a half and three-quarters of the lattice spacing *a*, and is preferably about 0.6 *a*. For example, the hole size *Ø* may be between 150 nm and 450 nm. The lattice pattern can be defined by using deep UV or E-beam lithography and transferred to the inorganic material by reactive ion etching. The thickness of the photonic crystal template is typically half the lattice spacing, for example, between 100 nm and 200 nm. The photonic crystal template provides vertical confinement to an optical mode similar to a conventional optical waveguide. Bottom cladding, under the photonic crystal template, is preferably provided by an oxide layer, such as silicon dioxide. The bottom cladding may, however, be air, formed by a suspended photonic crystal membrane. Upper cladding, above the photonic crystal, is preferably provided by air. Upper cladding may, however, be provided by a layer of silicon dioxide. In that case, the thickness of the silicon dioxide layer is kept sufficiently small, typically below 100 nm, to allow effective sensing of biomolecules on the photonic crystal surface. The refractive index of the claddings should be smaller than that of the photonic crystal template.

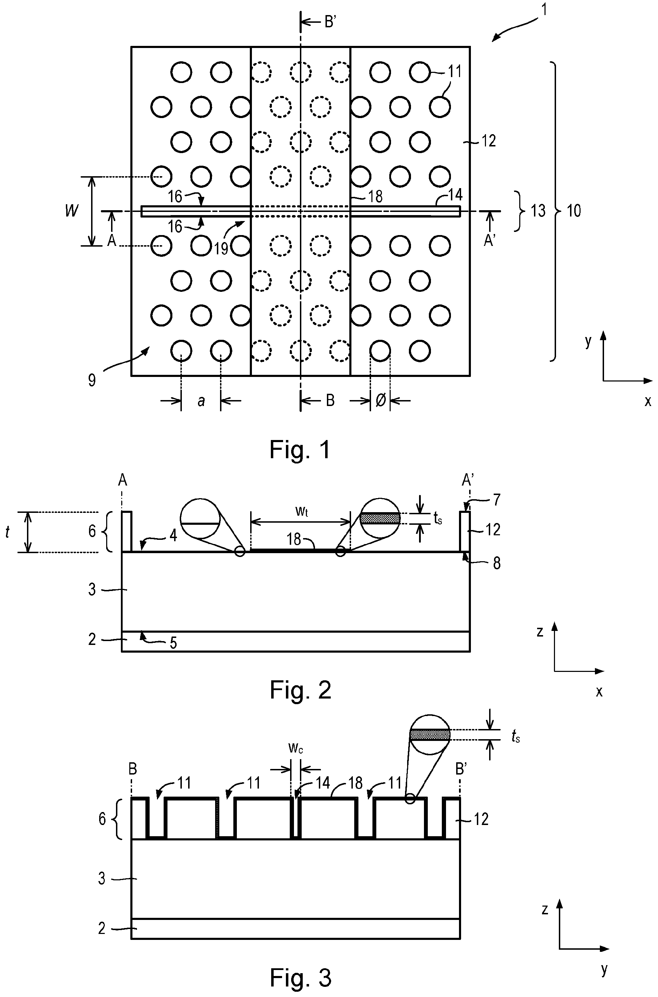

Referring to Figures 1 to 3, a first microphotonic device 1 is shown.

The microphotonic device 1 can be formed on a substrate 2 and comprises a bottom cladding layer 3 having first and second opposite faces 4, 5 and a patterned layer 6 (or "photonic crystal template") having first and second opposite face 7, 8 (hereinafter referred to as "upper and lower faces" or "upper and lower surfaces") disposed on the first face 4 of the bottom cladding layer 3.

The photonic crystal template 6 comprises a two-dimensional, hole-based photonic crystal waveguide 9 comprising a photonic crystal 10 formed by a lattice of holes 11 (or "air-holes") in a layer 12 of dielectric material (also referred to as the "slab" or "body"), and a waveguide 13 in the photonic crystal 10 formed by defects in the lattice (i.e., the absences of holes 11), and an elongate slot 14 running along the middle of the waveguide 13. Herein, the photonic crystal waveguide 9 and slot 14 is referred to as a slotted waveguide 6. The slot 14 is rectangular with parallel long sides 16. As will be explained in more detail later, the slot 14 can be tapered (i.e., with straight, non-parallel long sides). A rectangular layer 18 of biomolecules runs transversely across the photonic crystal template 6 on the upper surface 7 of the photonic crystal template 6. A strip cavity 19 is formed where the biomolecular layer 18 intersects with the slotted photonic crystal waveguide 6.

The lattice spacing *a* is between 300 nm and 600 nm. The hole diameter *Ø* is between a half to three-quarters of the lattice spacing *a*, for example, about two-thirds of the lattice spacing *a*. The dielectric material is silicon or silicon nitride and has a thickness *t* of between about 180 and 360 nm. The bottom cladding layer 3 may comprise a dielectric material, such as silicon dioxide. The layer 18 of biomolecules can be formed by depositing (or "printing") a solution (not shown) containing biomolecules using high-resolution electrohydrodynamic inkjet printing, for example, as described in EP 3 333 605 A1 which is incorporated herein by reference.

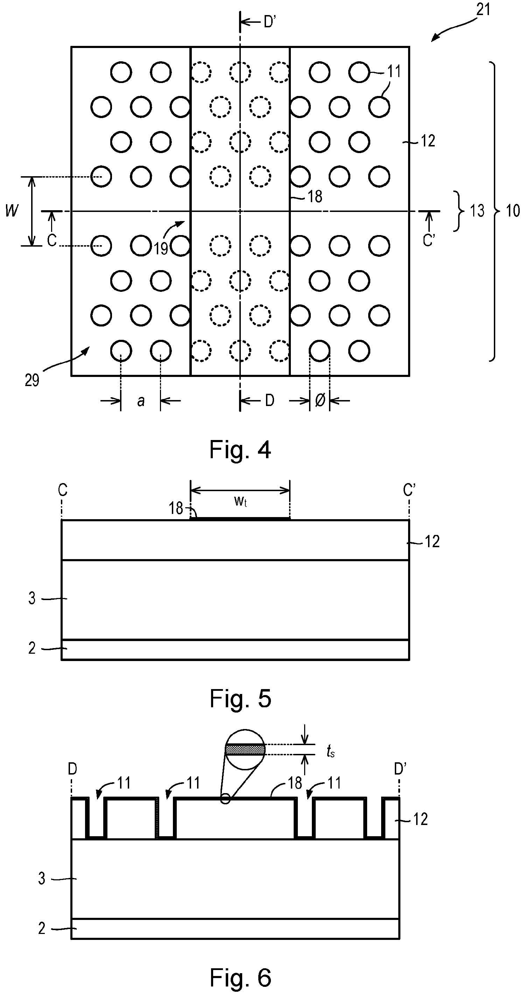

Referring to Figures 4 to 6, a second microphotonic device 21 is shown.

The second microphotonic device 21 is similar to the first microphotonic device 1 (Figure 1) hereinbefore described except that it does not have an elongate slot running along the middle of the waveguide 13. Herein, the photonic crystal waveguide 29 without a slot is referred to as a "non-slotted photonic crystal waveguide" or an "unslotted photonic crystal waveguide".

As will be explained in more detail hereinafter, non-slotted photonic crystal waveguides are generally less suited to creating cavities using ultra-thin layers of organic material, such as a mono-layer of biomolecules, whereas a slotted photonic crystal waveguide 6 (Figure 1) are better suited, exhibiting considerably better performance. As will also be explained in more detail hereinafter, non-slotted photonic crystal waveguides, however, may be used if thick layers of organic material are employed.

Performance of optical sensors may be evaluated via their sensitivity to a change in the refractive index of the local environment. For a biosensor, an index change can be caused by the binding of a target molecule to a probe molecule attached to the surface of the sensor. If the sensor consists of an optical cavity, an index change Δn results in a change of in cavity resonance wavelength Δλ which can be detected by, for example, a spectrometer. The shift is proportional to the amount of target molecules binding to the sensor. Thus, the sensor can be used to identify a particular molecule and to determine its concentration. For optical sensors, the sensitivity S is defined by S = Δλ/Δn in units of nm per Refractive Index Unit, nm/RIU. The ability to resolve a shift depends on the linewidth δλ of the resonance and is expressed by FoM = S/ δλ, where FoM is the Figure of Merit. The linewidth is linked to the quality factor Q of the cavity via the relation Q = λ/ δλ and thus FoM = SQ/λ.

A numerical study is used to investigate creation of a cavity using a strip with refractive index 1.5 on top of a silicon photonic crystal template in an aqueous (water) environment defining the top cladding. The photonic crystal template bottom cladding is silicon dioxide. The refractive index of the strip is chosen to match that of a layer of single-strand DNA (ssDNA), which in this example is the probe layer. The water top cladding simulates the sensor properties when encased by microfluidics to deliver the target analytes. Refractive indices of 1.3 for water, 1.45 for silicon dioxide and 3.5 for silicon are used. In this example, a strip having a width of 4.75*a* is used, where *a* is the lattice spacing. This corresponds to a strip having a width *wₜ* of 1.75 µm for a lattice spacing *a* of 370 nm and targeted cavity resonance wavelength around 1.3 µm. A strip width *wₜ* of between 1 and 5 µm can be used to create the cavity.

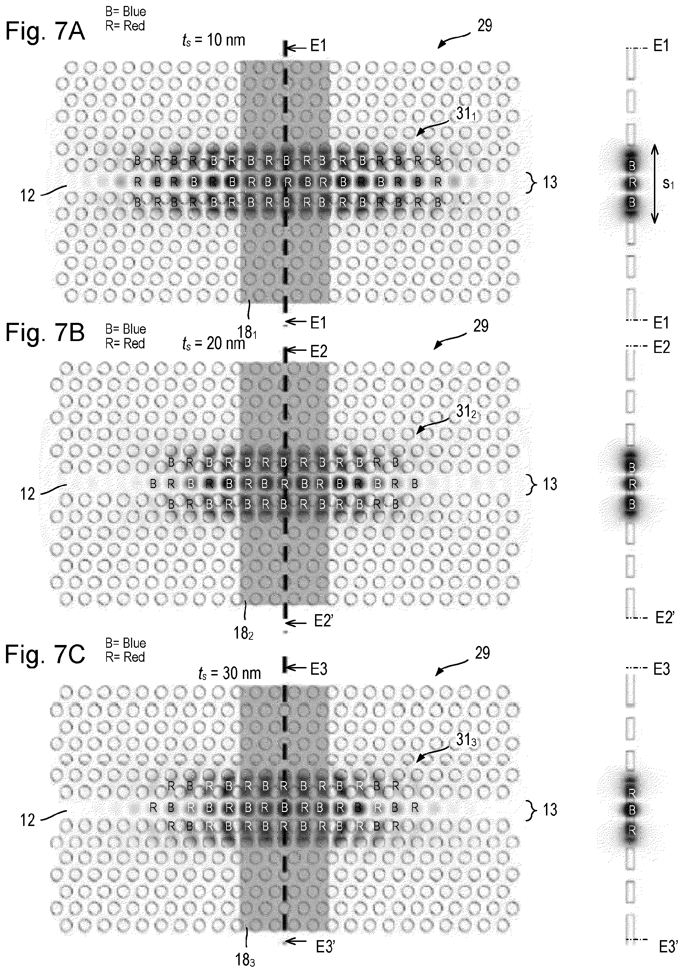

Referring to Figures 7A, 7B and 7C, first, second and third cavity mode distributions 31₁, 31₂, 31₃ for an unslotted photonic waveguide 29 are shown.

The cavity mode distributions 31₁, 31₂, 31₃ are created by respective strips 18₁, 18₂, 18₃ on a non-slotted photonic crystal waveguide template 29 (i.e., the same unslotted photonic waveguide) with a top water cladding and a strip thickness *tₛ*.

For the first cavity mode distribution 31₁, a first strip 18₁ has a thickness *tₛ* of 10 nm. For the second cavity mode distribution 31₂, a second strip 18₂ has a thickness *tₛ* of 20 nm. For the third cavity mode distribution 31₃, a third strip 18₃ has a thickness *tₛ* of 30 nm.

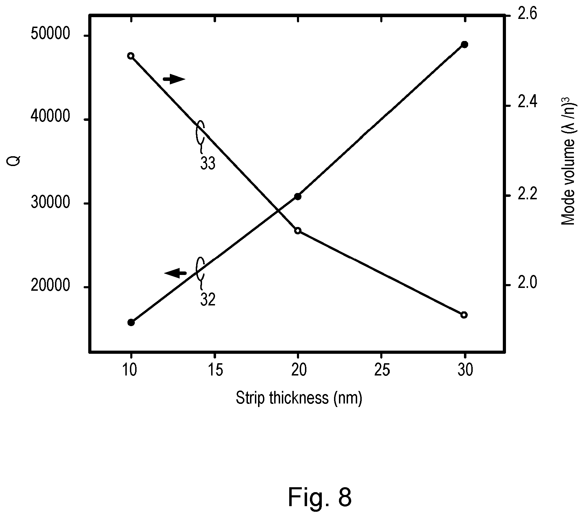

Referring also to Figure 8, line plots 32, 33 of calculated quality factor Q and mode volumes of a function of strip thickness are shown for the unslotted photonic waveguides 29.

Reasonably high Q cavity can be created in all cases, but as the strip thickness *tₛ* is reduced, the mode volume increases significantly due to mode leaking out of the photonic crystal waveguide 13₁, 13₂, 13₃, resulting in a strong decrease in the value of Q. Given that a strip made from a monolayer of bio-probes, such as DNA molecules, has a thickness of between 2 or 3 nm to 10 nm, this strip-cavity configuration (i.e., using an unslotted photonic waveguide) does not perform sufficiently well when immersed in water and, thus, tends to be unsuited for use with microfluidics.

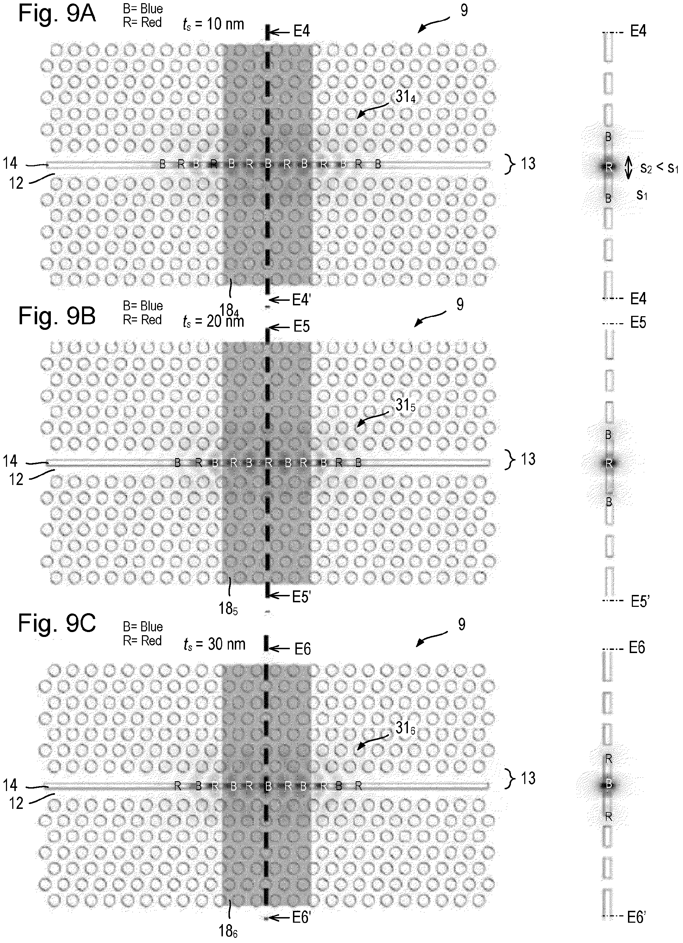

Referring to Figures 9A, 9B and 9C, fourth, fifth and sixth cavity mode distributions 31₄, 31₅, 31₆ for a slotted photonic waveguide template 9 are shown. In this case, the width *wₛ* of the slots 14₁, 14₂, 14₃ is 100 nm.

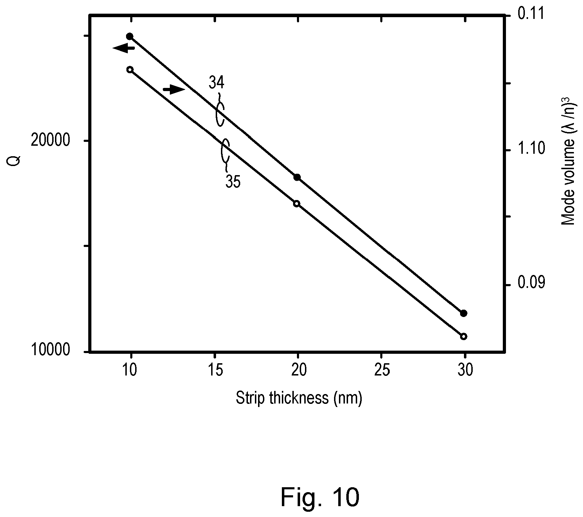

Referring also to Figure 10, line plots 34, 35 of calculated quality factor Q and mode volumes of a function of strip thickness are shown for the slotted photonic waveguide 9.

The cavity mode distributions 31₄, 31₅, 31₆ and the line plots 34, 35 show that a cavity with a high Q and small mode volume can be created by a strip covering the surface of the slotted photonic waveguide 9. The optical mode is the strongest in the air-slot 14 as opposed to inside the photonic crystal material 12 (Figures 7A to 7C) for the non-slotted photonic crystal waveguide 29 (Figures 7A to 7C) thereby increasing optical field overlap with the target analytes and increasing amplified sensitivity due to a smaller mode volume of the cavity. Unlike the non-slotted strip photonic crystal waveguide cavity 29 (Figures 7A to 7C), the value of Q for the slotted photonic crystal waveguide 9 strongly increases in an aqueous environment, thus making this configuration well suited for integration with microfluidics. Furthermore, the value of Q also strongly increases as the thickness of the strip decreases, indicating suitability for use with ultrathin strip layers.

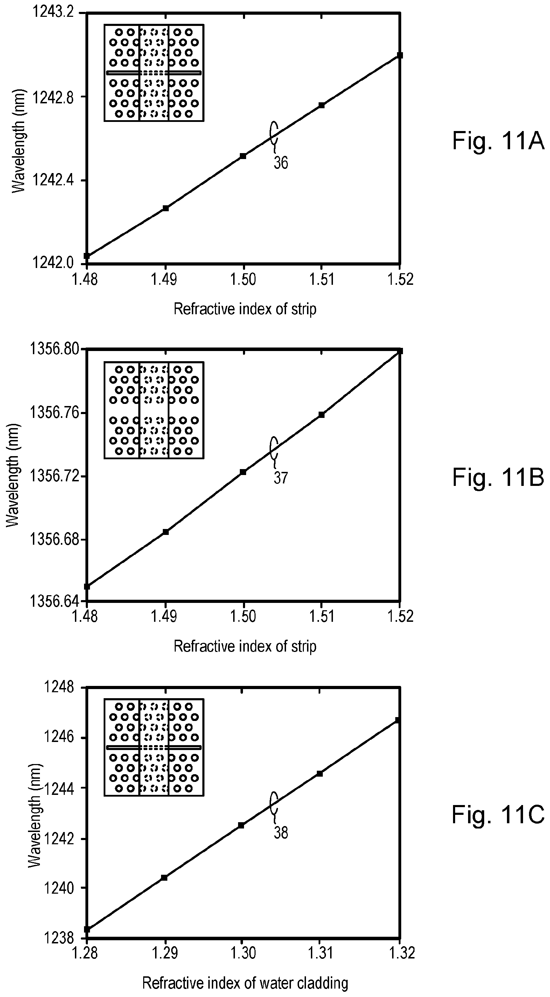

Referring to Figures 11A, 11B and 11C, line plots 36, 37, 38 of resonant wavelength as a function of refractive index are shown. Figure 11A shows a line plot of resonant wavelength as a function of refractive index of material used in a 10 nm-thick strip for a slotted photonic crystal waveguide. Figure 11B shows a line plot of resonant wavelength as a function of refractive index of material used in a 10 nm-thick strip for an unslotted photonic crystal waveguide. Figure 11C shows a line plot of resonant wavelength as a function of refractive index of aqueous solution lying over a slotted photonic crystal waveguide having a 10 nm-thick strip of material.

Figures 11A, 11B and 11C show a comparison of sensitivity for slotted and non-slotted strip photonic crystal waveguide cavities. The slotted strip photonic crystal waveguide cavities in Figure 11C has a top water cladding.

In particular, Figures 11A and 11B show, for slotted and non-slotted strip photonic crystal waveguide cavities, a change in resonance for changes in the refractive index of the strip having a thickness of 10 nm. A change in refractive index can be produced by hybridization of ssDNA strands attached to a sensor surface to target complementary strand DNA (cDNA) brought by a microfluidic circuit (not shown). The results show that a slotted strip photonic crystal waveguide cavity is about six times more sensitive than a non-slotted photonic crystal waveguide cavity and that, as a result, the Figure of Merit FoM is about ten times greater thereby demonstrating superior performance for even thin strips.

Comparison of the performance of biosensors is usually based on their sensitivity to a change of the refractive index of the medium surrounding the sensor, and not just a thin strip layer, as described above.

Referring to Figure 11C, change of the resonance wavelength of the slotted strip photonic crystal waveguide cavity with a change in the refractive index of water cladding is shown. The slotted strip photonic crystal waveguide cavity exhibits a FoM of 4,200. By comparison, a slotted waveguide cavity described in C. Caër, Serna-Otalvaro, W. Zhang, X. Le Roux, E. Cassan: "Liquid sensor based on high-Q slot photonic crystal cavity in silicon-on-insulator configuration", Optical Letters, volume 39, page 5792 (2014) exhibited a FoM of 3,700. Thus, this shows that a similarly highperforming cavity can be obtained by surface deposition of a strip of organic material.

### First multiplexed biosensor 50

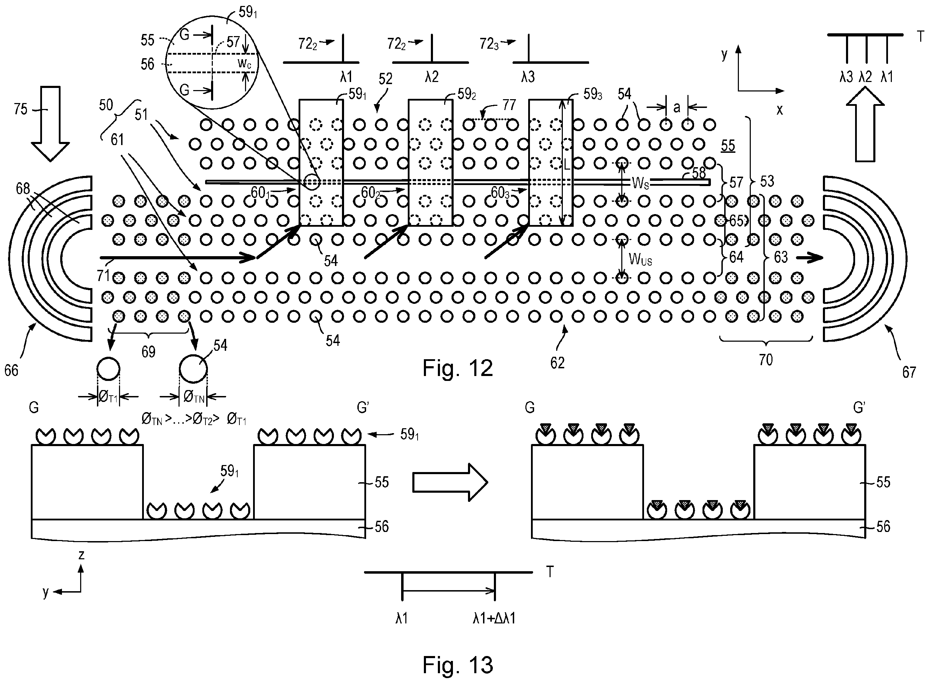

Referring to Figures 12 and 13, a first multiplexed biosensor 50 is shown.

The first multiplexed biosensor 50 comprises a first part 51 comprising a slotted photonic waveguide 52. The slotted photonic waveguide 52 has a similar structure to slotted photonic crystal waveguide 9 (Figure 1) hereinbefore described. The slotted photonic crystal waveguide 52 comprises a photonic crystal 53 comprising air-holes 54 in a dielectric material layer 55 which is supported on a cladding layer 56 which in turn can be supported on a substrate (not shown) and a waveguide 57 in the photonic crystal 53, and a gently-tapered elongate slot 58 running along the middle of the waveguide 57. The first part 51 also includes a series of overlying strips 59₁, 59₂, 59₃ of respective biomolecular material spaced apart along the length of the slotted photonic waveguide 52 forming respective cavities 60₁, 60₂, 60₃ in a similar way to that hereinbefore described.

The multiplexed biosensor 50 comprises a second part 61 comprising an unslotted photonic waveguide 62. The unslotted photonic waveguide 62 has a similar structure to unslotted photonic crystal waveguide 29 (Figure 3) hereinbefore described. The unslotted photonic crystal waveguide 62 comprises a photonic crystal 63 formed by air holes 54 in the dielectric material 55 and a waveguide 64 in the photonic crystal 63. The unslotted photonic crystal waveguide 62 does not have an elongate slot. The second part 61 of the biosensor does not have overlying strips of material and does not have any cavities.

The slotted and unslotted photonic waveguides 52, 62 run side by side and share a common photonic crystal portion 65, for example, by virtue of holes 54.

The unslotted photonic waveguide 62 is interposed between first and second lightcouplers 66, 67 in the form of gratings which, in this case, comprise multiple, concentric, half-ring-shaped slots 68. Light passes between a coupler 66, 67 and an end of the unslotted photonic waveguide 62 through transition regions 69, 70 comprising short, unslotted photonic waveguide sections. Air holes 54 in the transition regions 69, 70 are shown shaded to aid clarity.

In this configuration, light 71 which is guided through the unslotted photonic waveguide 62 is side-coupled into the slotted photonic waveguide 52 and the strip cavities 60₁, 60₂, 60₃. Each cavity 60₁, 60₂, 60₃ has a respective, different resonance λ1, λ2, λ3. Coupling into the cavities 60₁, 60₂, 60₃ results in sharp dips 72₁, 72₂, 72₃ in the transmission spectra of the waveguide 62, each dip 72₁, 72₂, 72₃ corresponding to a cavity resonance λ1, λ2, λ3. Thus, all the cavities 60₁, 60₂, 60₃ can be simultaneously monitored through the unslotted photonic waveguide 62.

Light 75 from a single mode TE polarized fibre (not shown) can couple into the first light coupler 66. Examples of suitable gratings are described in A. Faraon, I. Fushman, D. Englund, N. Stoltz, P. Petroff, J. Vuckovic: "Dipole induced transparency in waveguide coupled photonic crystal cavities", Optical Express, volume 16, pages 12154 to 12162 (2008) and Y. Zou, S. Chakravarty, D.N. Kwong, W.C. Lai, X. Xu, X. Lin, A. Hosseini, R.T. Chen: "Cavity-Waveguide Coupling Engineered High Sensitivity Silicon Photonic Crystal Microcavity Biosensors With High Yield" IEEE Journal of Selected Topics in Quantum Electronics, volume 20, Art no. 6900710 (2014) which provides a 50 nm bandwidth. This light-coupling arrangement tends to require less stringent alignment than a fibre-contacting arrangement.

The transition regions 69, 70 comprise etched air-holes 54 of gradually increasing size Ø_{T1}, Ø_{T2},..., Ø_{TN}, *i.e.*, increasing in size between the coupler 66, 67 and the unslotted photonic waveguide 62. This can improve coupling into and out of the unslotted photonic waveguide 62, as well as reducing Fabry Perot back reflections.

Coupling between the unslotted photonic waveguide 62 and slotted photonic waveguide 52 is permitted by matched mode symmetry. In this example, the waveguide 64 in the unslotted photonic waveguide 62 has a width of 0.9 *a* and the waveguide 57 in the slotted waveguide 52 has a width of 1.2 *a* wide (where *a* is the lattice spacing).

A cavity 60₁, 60₂, 60₃ created from a strip 59₁, 59₂, 59₃ has a resonance frequency corresponding to the bottom of the slotted photonic waveguide 52.

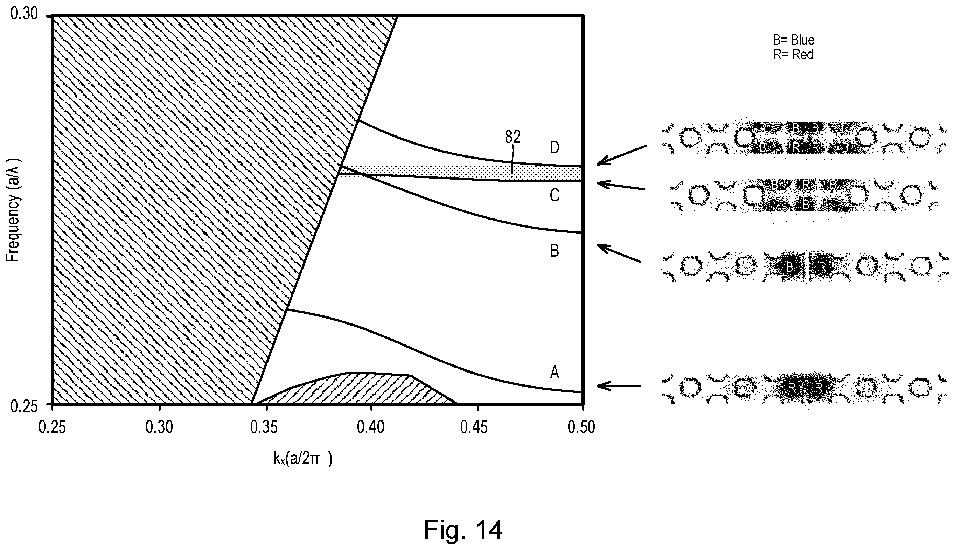

Referring also to Figure 14, first, second, third and fourth dispersion bands A, B, C and D for a slotted photonic crystal waveguide are shown for a waveguide width 1.2 *a.* In this example, only band D is of interest due to mode symmetry. When a strip is patterned on this waveguide, a cavity is created with resonance frequency spectrally close to the bottom of the fourth dispersion band D (also called "band edge") located at k = 0.50. The cavity is "pulled" from the band edge and, thus, has the same mode symmetry. The frequency is slightly smaller (in other words, the wavelength is slightly larger), than that that corresponding to the band edge of fourth dispersion band D. For instance, suppose the band edge corresponds to a wavelength of 1,300 nm, then the cavity would be typically between 1,300nm and 1,310 nm, depending on strip index and thickness.

Referring also to Figure 14, the cavity 60₁, 60₂, 60₃ can couple to the unslotted photonic waveguide 62 provided the frequency of the cavity 60₁, 60₂, 60₃ intersects the band 82 of the waveguide 62. The widths W_{S}, W_{US} of the waveguides 57, 64 can be adjusted to adjust the matching frequency region.

The second and third dispersion bands B, C correspond to the unslotted waveguide whose mode profile has same symmetry as slotted waveguide band D and, therefore, the same symmetry as the cavity of the slotted waveguide. Modes from third band C cannot couple to band B because of mismatched symmetry. To couple the unslotted waveguide to the cavity, the resonance frequency of the cavity should be within the frequency range 82 spanned by the second and third frequencies around the third band C (shown shaded region). Thus, the waveguide width for the slotted and unslotted waveguides should satisfy these conditions. A slotted waveguide should be wider than an unslotted waveguide. Here, for a slotted waveguide width 1.2 *a*, the unslotted waveguide width matching these conditions is about 0.9 *a*.

Referring in particular to Figures 12 and 13, a strip 59₁, 59₂, 59₃ of bio-probes is patterned across the slotted photonic waveguide 52 to create a cavity 60₁, 60₂, 60₃.

Each strip 59₁, 59₂, 59₃ has a length L. Each strip 59₁, 59₂, 59₃ is sufficiently long that it crosses over the slot 58. Each strip 59₁, 59₂, 59₃ can extend, on its far side (i.e., the side furthest from the unslotted photonic waveguide 62), beyond the edge 77 of the slotted photonic crystal waveguide 52. The strip 59₁, 59₂, 59₃ does not extend over the waveguide 64 of the unslotted photonic crystal waveguide 62 and so does not form any additional cavities.

The slot 58 has different widths w_{C} at different positions along the waveguide 52 to provide strip cavities 60₁, 60₂, 60₃ with different resonance wavelengths λ1, λ2, λ3. In this case, this is achieved by smoothly tapering the slot 58. However, a slot 58 having steps in width (which may or may not vary monotonically along its length) may be used.

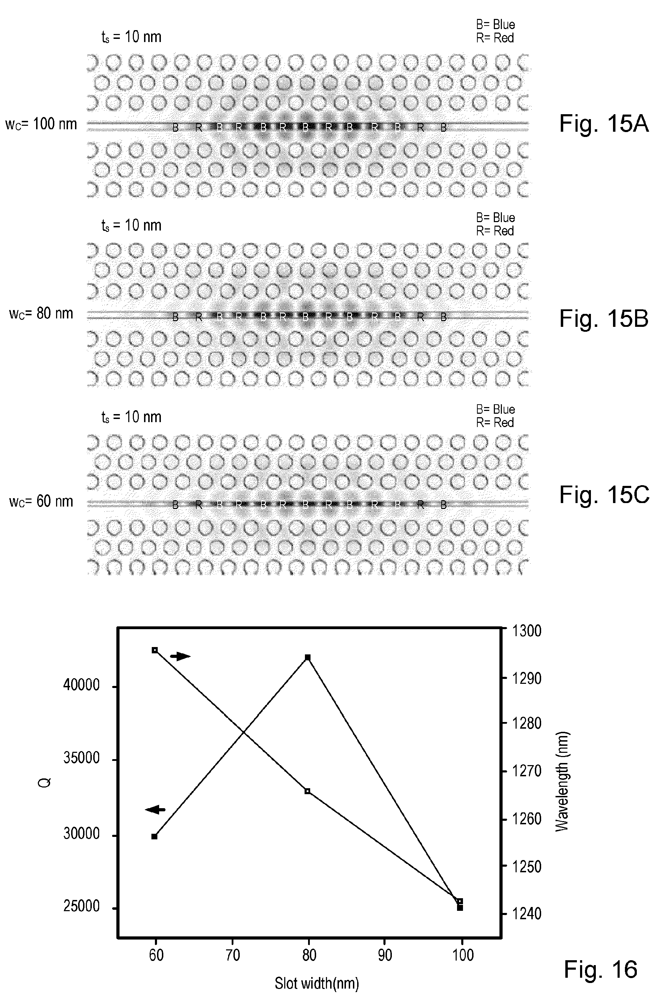

Referring to Figures 15A, 15B, 15C and 16, a numerical simulation demonstrates that the Q value of the cavity can be kept high across a range of slot widths w_{C}, in this case, between 60 nm and 100 nm. The variation in slot width w_{C} translates into a variation in cavity resonance of about 50 nm. The cavities are arranged to have distinguishable resonances to avoid mutual coupling. The minimum spectral spacing between each cavity is governed by a maximum resonance shift Δλₘₐₓ due to binding of the probe cavity to a target analyte. For this example, a slotted photonic waveguide with slot width between 60 nm and 100 nm can support about 50 cavities for Δλₘₐₓ = 1 nm. Thus, each slotted photonic waveguide can be used for simultaneously sensing or detecting up to 50 different target molecules. For a spacing of about 1 µm between the edges of each strip cavity and a strip width of 1.75 µm, then the length of the slotted photonic waveguide needs to be about 140 µm to accommodate 50 cavities.

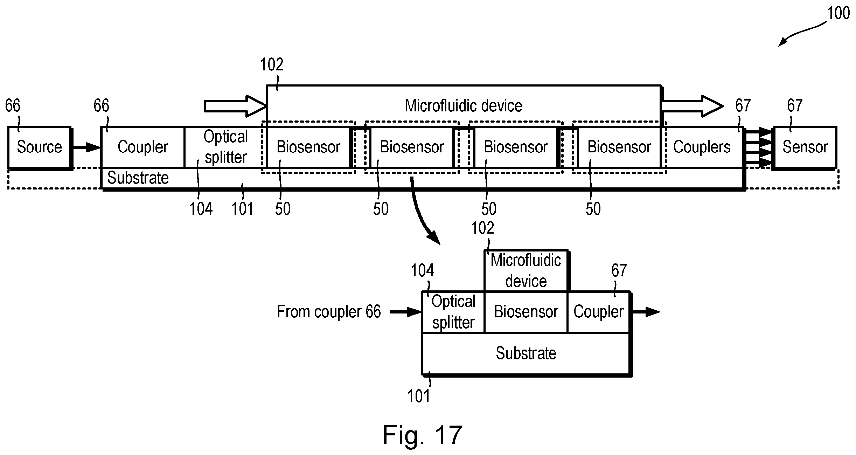

Referring to Figure 17, a testing device 100 is shown which includes an array of biosensors 50 supported on a common substrate 101 and a microfluidic device 102 for bringing target analytes to the bio-probes strip cavities.

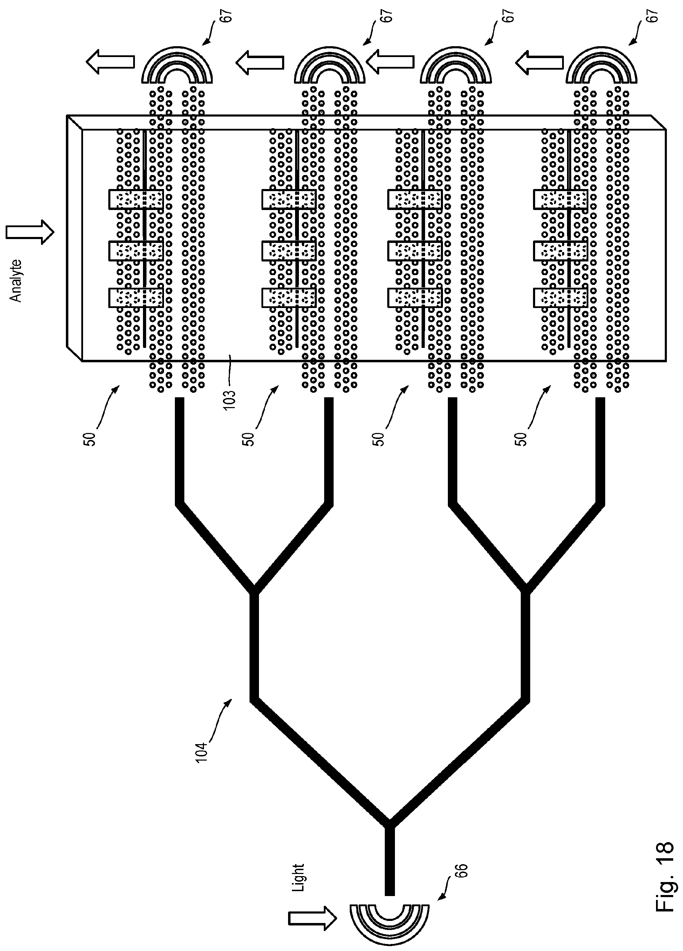

Referring also to Figure 18, a microfluidic channel 103 of the microfluidic device 102 can run across the slotted photonic crystal waveguide. The width of the channel 103 corresponds to the length of the slotted photonic crystal waveguide. This can allow a densely-packed array of cavities to be incorporated into one testing device 100. Thus, many waveguides can be served per microchannel thereby enhancing multiplexing capabilities.

The testing device 100 includes a common coupler 66 and light received via the common coupler 66 is delivered to each biosensor 50 via a network of optical splitters 104.

Before using a biosensor, a protocol is followed which generally includes activating the photonic crystal surface to enable bio-probes to bind to the surface of the photonic crystal, depositing the bio-probes to form strips on a slotted photonic crystal waveguide, incubating, washing, blocking non-specific binding, incorporating microfluidic channels on the photonic crystal waveguide to bring the target analytes, incubating and performing a final wash.

A protocol for binding a target cDNA to a ssDNA probe (hybridization) anchored on a silicon (Si), silicon dioxide (SiO₂) or silicon nitride (SiₓN_{y}) sample will now be described.

The sample surface is activated by oxygen plasma treatment or by exposure to a piranha solution to create OH groups. The OH groups enable covalent binding of silane groups, such as APTES ((3-Aminopropyl)trimethoxysilane) or GPTS ((3-Glycidyloxypropyl)trimethoxysilane) and formation of a self-assembled monolayer (SAM) either via liquid or gas phase.

The sample is washed with toluene, ethanol, acetone (all with > 95% purity), dried with nitrogen and stored in a low humidity environment, for example, an argon- or nitrogenfilled storage cabinet.

Following this treatment, ssDNA strands in water can covalently bind to the SAM surface and left to incubate overnight in a sealed container (not shown) under a relatively high humidity.

Following incubation, the sample is washed in a PBS buffer with ultrasonic bath to remove unbound bio-probes (i.e., ssDNA) and left in ultrapure water for 5 minutes to block all OH groups left on the surface.

Prior to hybridization, the sample with ssDNA is immersed in a buffer containing Tris-Cl, NaCl, EDTA, Tween-20 and BSA for 30 minutes to prevent electrostatic binding of the target cDNA strand. Binding of the cDNA to ssDNA involves a buffer containing Tris-Cl, NaCl, EDTA, Tween-20 and the cDNA strands heated to about 90 °C before adding the sample with the bound ssDNA. Following incubation, the non-hybridized DNA can be removed with a buffer containing NaCl, trisodium citrate and SDS.

The bio-probe strips can be patterned with feature size smaller than 5 µm. Such resolution can be achieved via printing, preferably with electrohydrodynamic inkjet printing. Modified AFM tips, however, could also be used.

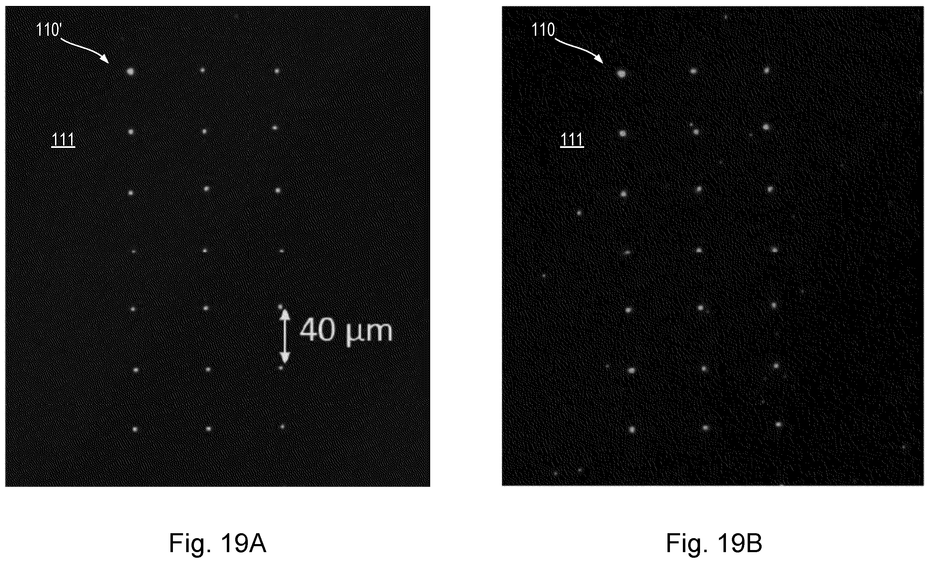

Referring to Figure 19A and 19B, arrays of single-strand DNA and hybridized DNA microdots 110', 110 are respectively shown.

The hybridized DNA microdots 110 are formed following the protocol hereinbefore described. ssDNA dots 110' about 3 µm in diameter are printed with an electrohydrodynamic inkjet printer (not shown) on a silicon substrate (not shown) having a thin (50 nm) capping layer 111 of silicon dioxide (SiO₂). The SiO₂ layer 111 helps to avoid destructive optical interference and quenching by the silicon substrate when exciting the fluorescent label attached to the DNA.

The bio-ink (not shown) consists of ssDNA strands in water with 10% glycerol to avoid drying-induced clogging of the printer nozzle. Inkjet-printed ssDNA strands are hybridized with their cDNA strands in Eppendorf tubes (not shown) and the fluorescent signal measured with a confocal microscope (not shown). Integration with the label-free photonic crystal biosensor involves incorporating microfluidic channels made from, for example, PDMS to deliver the target analytes (cDNA). Reference is made to M.G. Scullion, A. Di Falco, T.F. Krauss: "Slotted photonic crystal cavities with integrated microfluidics for biosensing applications", Biosensors and Bioelectronics, volume 27, issue 1, pages 101-105 (2011).

The movement of fluid within these channels enables separation of bound and unbound molecules to the bio-probe strip. Specific binding results in a shift of the resonance wavelength of the strip cavity which can be monitored by the light transmitted through the non-slotted photonic crystal waveguide. PDMS maintains mechanical stability for up to 200 °C. Thus, the heated cDNA solution can be directly injected through the microchannel and left to incubate with the printed ssDNA bio-probes, typically for a few hours, before washing the surface with injected ultra-pure water. ssDNA is used as the bio-probe material. However, aptamers, antibodies and other proteins could also be used.

### Second multiplexed biosensor 150

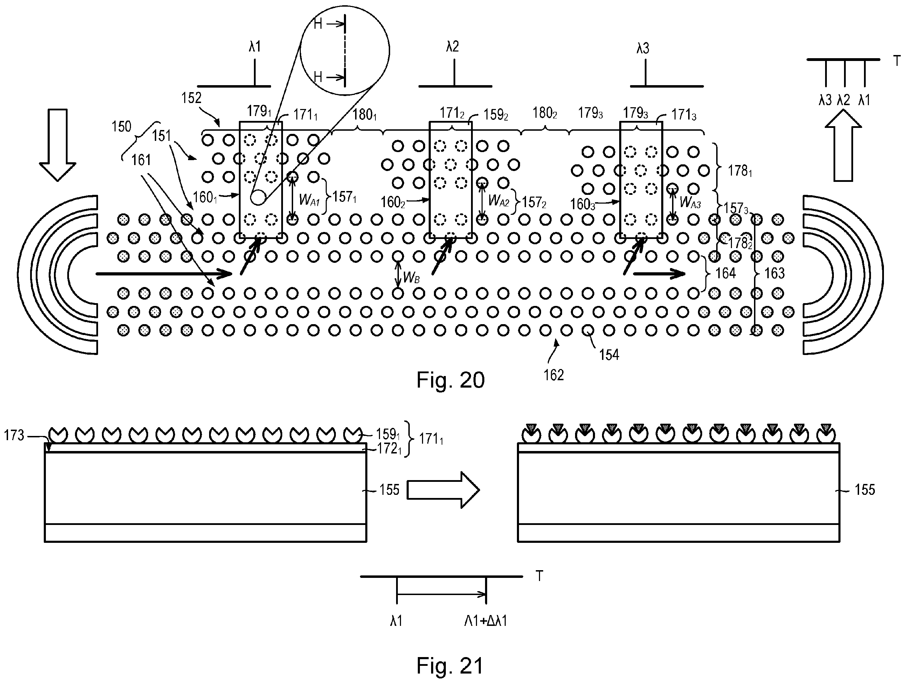

Referring to Figures 20 and 21, a second multiplexed biosensor 150 is shown.

The second multiplexed biosensor 150 is similar to the first multiplexed biosensor 50 (Figure 12) hereinbefore described. In particular, the second multiplexed biosensor 150 has a second part 161 which is substantially the same as the second part 61 (Figure 12) of the first multiplexed biosensor 50 (Figure 12), although the width of the waveguide differs.

The second multiplexed biosensor 150 has a first part 151 which differs from the first part 51 (Figure 12) of the first multiplexed biosensor 50 (Figure 12) in four ways.

First, the first part 151 has an unslotted photonic waveguide 152, although a slot may be used.

Secondly and thirdly, the unslotted photonic crystal waveguide 152 comprises a photonic crystal 153 comprising first and second parts 178₁, 178₂ either side of variablewidth waveguide 157₁, 157₂, 157₃ and the first side 178₁ is non-continuous, instead broken into discrete sections 179₁, 179₂, 179₃ separated by gaps 180₁, 180₂. Waveguide width, W_{A1}, W_{A2}, W_{A3} is defined by centre-to-centre distance of the air-holes 154, for example, having values between 0.98 and 1.0 *a*.

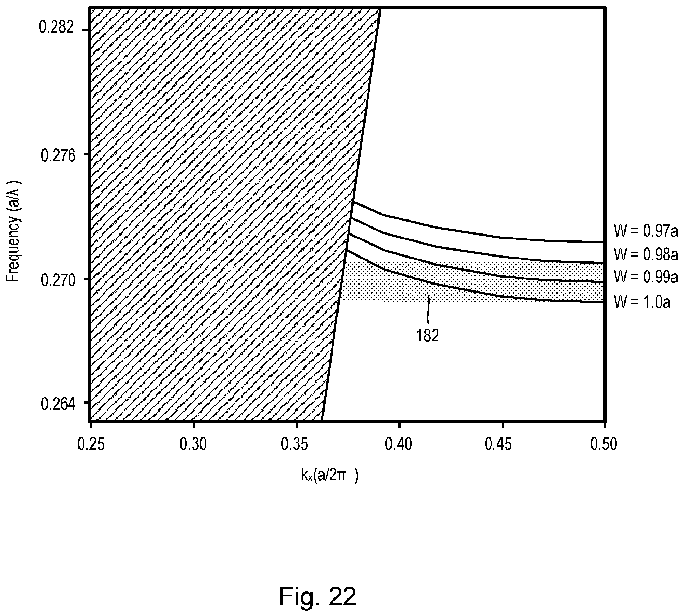

Coupling between modes of the waveguides follows the same principle as hereinbefore described in relation to modes of slotted and unslotted waveguides. In this case, the frequency range 182 spanned by the waveguide without the strip is highlighted. Figure 22 shows bands for waveguide width between 1 and 0.97 a for the strip waveguide. Strip cavities are still spectrally close to the band edge of these bands. Thus, the cavities will couple to the waveguide for widths between 1 and 0.97 *a*.

In the case of slotted cavities, no gaps and no discrete sections are needed because lattice symmetry is preserved between cavities. In this case, transition from one cavity to the next cannot be done without breaking the lattice symmetry due to the change in waveguide width. Preservation of symmetry is usually preferred to avoid additional reflections and losses. In addition, air gaps prevent potential coupling between different waveguide modes. A gap length of a few lattices (for instance 5 lattices) is usually sufficient.

Fourthly, the overlying strips 171₁, 171₂, 171₃ of biocompatible material are thicker than a monolayer (for example, greater than or equal to 10 nm) and less than or equal to 100 nm. Keeping the strip thickness below 100 nm can help to preserve the sensor surface sensitivity and the high Q of strip cavities.

Each strip 171₁, 171₂, 171₃ is a bi-layer which comprises a base layer 172₁ of a respective bio-compatible material which is solution-processable, which is transparent at the cavity resonance wavelength, and which is able to immobilize bio-probes 159₁. Biocompatible materials can be of a type which can be cleaned from the sample surface 173 (i.e., surface 173 of layer 155) and printed again to immobilize fresh probes 159₁ thereby providing a re-usable biosensor. For example, polydopamine is a bio-compatible material which is transparent in the near-infrared, which can be inkjet-printed, and which can be used to immobilize proteins, as well as thiol or amine-containing molecules. Polydopamine can be removed from silicon or silicon dioxide substrate using acetone thereby providing a re-usable photonic crystal biosensor. Other biocompatible and transparent materials include chitosan for the immobilization of amino groups or enzymes and cellulose for the immobilization of antibodies and enzymes.

The thickness of the base layer can be adjusted by the concentration of the biocompatible material in solution which, in for polydopamine, is a Tris-buffer. It can also be adjusted according to the number of printer passes.

Employing thicker strips allows unslotted photonic crystal waveguides to be used. This can help make the device easier to fabricate and avoid the need to infiltrate a slot.

Referring still to Figures 20 and 21, the second multiplexed biosensor 150 includes the photonic waveguide 152 and strips 171₁, 171₂, 171₃ which form strip cavities 160₁, 160₂, 160₃.

Similar to the first multiplexed biosensor 50 (Figure 12), in the second multiplexed biosensor 150, the photonic waveguide 152 is side-coupled to the photonic crystal waveguide 162 which used for monitoring transmission spectra.

The unslotted photonic waveguide 162 has a similar structure to unslotted photonic crystal waveguide 29 (Figure 3) hereinbefore described and exhibits mode cavities of a type shown in Figures 7A to 7C. The unslotted photonic crystal waveguide 162 comprises a photonic crystal 163 formed by air holes 154 in the dielectric material 155 and a waveguide 164 in the photonic crystal 163. The unslotted photonic crystal waveguide 162 does not have an elongate slot. The second part 161 of the biosensor does not have overlying strips of material and does not have any cavities.

Referring also to Figure 22, the widths W_{A1}, W_{A2}, W_{A3} of photonic crystal waveguide 152 should be smaller, but similar to, the width W_{B} of photonic crystal waveguide 162 to allow coupling of photonic crystal waveguide 162 to the strip cavity of photonic crystal waveguide 152.

Figure 22 shows a dispersion diagram a non-slotted photonic waveguide having a width w between 0.97a and 1.0a. A photonic waveguide having a width 1.0a can couple to a strip cavity mode provided the photonic waveguide width of the cavity is between 0.98a and 1.0a (which is highlighted). If the photonic waveguide width of the cavity is between 0.97a, then the photonic waveguide does not couple into a strip cavity mode.

In the second multiplexed biosensor 150, strips 171₁, 171₂, 171₃ with different thicknesses provide cavities with different resonant wavelengths allowing multiplexing. Larger variations of resonance wavelength can be achieved by geometric variation of the photonic crystal waveguide 152, such as a reduction in width W_{A} in different parts of the waveguide, i.e., W_{A1}≠W_{A2} ≠W_{A3}.

The second multiplexed biosensor 150 can be prepared in two ways.

In one approach, bio-compatible materials (such as polydopamine) are deposited to form strips 172₁ on the photonic crystal waveguide via high-resolution inkjet printing, then bio-probes 159₂ (such as thiol and amine modified probes) are deposited on the biocompatible material strips 172₁ with the same printer. This is followed by incubation, washing, blocking of non-specific binding, incorporation of microfluidic channels on the photonic crystal waveguide to bring target analytes, incubate and a final wash.

In another approach, modified bio-compatible materials (such as modified polydopamine), which contains functional groups suitable for bio-probe binding, is chemically synthesised, and is directly deposited onto the photonic crystal template followed by printing of the bio-probe 159₂.

In a variation of the first and second devices, the resonance wavelengths of the printed strip cavities can be first measured with the bio-probes only. The sample is then immersed in a solution containing all target molecules. Alternatively, a solution containing all target molecules is printed directly on the bio-probes with the same inkjet printer. Following incubation and washing, analytes having no affinity with a bio-probe are removed and the strongly-bound ones result in a shift of the cavity resonance which can be detected as end-point reading. This approach does not require microfluidics. Thus, the device is simpler, but does not allow continuous monitoring of the binding process during the incubation time.

### Uses

Devices herein described allow detection and quantification of biomolecules on a silicon-based photonic chip. Pathogens, such as virus antigens, and specific enzymes secreted by cancerous cells can be detected. Due to the inert nature of silicon, blood samples and corrosive solutions, such as urine, can be analysed.

More generally, the devices can be used to detect, chemical species (i.e., they do not necessarily need to be biochemical species). Strips of printed polymers or probe molecules can bind to chemical species (which may be presented as a gas or liquid). The polymers or probe molecules can react to a change in environmental conditions, such as temperature, humidity, pressure, or pH of liquids.

Thin (<100 nm) printed polymers or probe molecules can be dissolved by the presence of particular chemical species in small concentrations. Provided these species do not react with the photonic crystal substrate, suppression of a cavity resonance can indicate the presence of a particular chemical and its concentration by the rate at which the resonance peak is suppressed. The possibility to sense the presence of a target molecule by monitoring both the spectral shift and intensity of the cavity resonance is a feature of a strip cavity which is not available to cavities fabricated in an inorganic photonic crystal template. In other words, it cannot be obtained by a cavity made using e-beam lithography, for instance, since e-beam-defined cavities are embedded (or "permanently formed") in the photonic crystal template and, thus, cannot be dissolved.

### Modifications

It will be appreciated that various modifications may be made to the embodiments hereinbefore described. Such modifications may involve other features which are already known in the design, manufacture and use of photonic biosensors and component parts thereof and which may be used in addition to features already described herein.

Although claims have been formulated in this application to particular combinations of features, it should be understood that the scope of the present invention is defined by the independent claims 1, 4 and 15.

## Claims

1. A sensor comprising:
a photonic crystal waveguide (9; 52) comprising a photonic crystal (20; 53) comprising holes (11; 54) in a layer (12; 55) of dielectric material and a waveguide (13; 57) formed by absences of holes in the photonic crystal;
at least one strip (18; 59₁, 59₂, 59₃) of biomolecules disposed on the photonic crystal waveguide, spaced apart along, and running across the photonic crystal waveguide so as to form respective strip cavities (19; 60₁, 60₂, 60₃), each of the at least one strip including a respective layer of material for sensing presence of a respective analyte; and
a slot (14; 58) running along the waveguide (57) of the photonic crystal waveguide (52; 152).

2. The sensor of claim 1, wherein the slot (58) has different widths along the first photonic waveguide.

3. The sensor of claim 1 or 2, wherein the photonic crystal waveguide (9; 52) is a first photonic crystal waveguide (52), the at least one strip (18; 59₁, 59₂, 59₃) comprises a series of strips (59₁, 59₂, 59₃) and the sensor further comprises:
a second photonic crystal waveguide (62) running along the first photonic crystal waveguide and arranged such that the strip cavities are coupled to the second photonic crystal waveguide.

4. A sensor comprising:
a first photonic crystal waveguide (52; 152) comprising a photonic crystal (53; 153) comprising holes (54; 154) in a layer (55; 155) of dielectric material and a waveguide (57; 157) formed by absences of holes in the photonic crystal;
a series of strips (59₁, 59₂, 59₃; 159₁, 159₂, 159₃) of biomolecules disposed on the first photonic crystal waveguide, spaced apart along, and running across the photonic crystal waveguide so as to form respective strip cavities (60₁, 60₂, 60₃; 160₁, 160₂, 160₃), each strip including a respective layer of material for sensing presence of a respective analyte; and
a second photonic crystal waveguide (62; 162) running along the first photonic crystal waveguide and arranged such that the strip cavities are coupled to the second photonic crystal waveguide.

5. The sensor of claim 4, wherein the first photonic crystal waveguide (152) is an unslotted photonic crystal waveguide (152).

6. The sensor of claim 3, 4 or 5, wherein second photonic crystal waveguide (62; 162) runs along one side of the first photonic crystal waveguide (52; 152), wherein the first and second photonic crystal waveguides share a common photonic crystal portion (65; 165).

7. The sensor of claim 3 or any one of claims 4 to 6, further comprising:
a first coupler (66) arranged at a first end of the second photonic crystal waveguide (62) for coupling light from an external source into the second photonic crystal waveguide; and
a second coupler (67) arranged at a second end of the second photonic crystal waveguide for coupling light out of the second photonic crystal waveguide to an external detector.

8. The sensor of claim 7, further comprising:
a first transition region (69) interposed between the first coupler and the first end of the second photonic crystal; and
a second transition region (70) interposed between the second end of the second photonic crystal and the second coupler.

9. The sensor of claim 1 or any one of claims 2 to 8, wherein the waveguide (157₁, 157₂, 157₃) has different widths along the first photonic crystal waveguide (152).

10. The sensor of claim 1 or any one of claims 2 to 9, wherein, on one side of first photonic crystal waveguide (152), the photonic crystal is broken into at least two sections (179₁, 179₂, 179₃) separated by at least one gap (180₁, 180₂).

11. The sensor of claim 1 or any one of claims 2 to 10, wherein each strip (59₁, 59₂, 59₃; 159₁, 159₂, 159₃) has a respective thickness of between one and ten monolayers.

12. The sensor of claim 1 or any one of claims 2 to 10, wherein each strip (59₁, 59₂, 59₃; 159₁, 159₂, 159₃) has a respective thickness of between 10 and 100 nm.

13. The sensor of claim 12, wherein each strip (59₁, 59₂, 59₃; 159₁, 159₂, 159₃) comprises a first layer for creating a respective cavity and a second layer disposed on the first layer, wherein the second layer is the layer of material for sensing presence of a respective analyte.

14. A testing device (100) comprising:
an array of the sensors (50) of claim 1 or any one of claims 2 to 13, the sensors (50) supported on a common substrate (101); and
a microfluidic structure (102) for delivering a fluidic sample to the sensors.

15. A method of forming a sensor, the method comprising:
· providing a template device, the template device comprising:
a photonic crystal waveguide (52; 152) comprising a photonic crystal (20; 53) comprising holes (11; 54) in a layer (12; 55) of dielectric material and a waveguide (13; 57) formed by absences of holes in the photonic crystal; and
a slot (14; 58) running along the waveguide (57) of the photonic crystal waveguide (52; 152); and
· printing at least one strip (18; 59₁, 59₂, 59₃) of biomolecules on the photonic crystal waveguide, spaced apart along, and running across the photonic crystal waveguide so as to form respective strip cavities (60₁, 60₂, 60₃; 160₁, 160₂, 160₃), each strip including a respective layer of material for sensing presence of a respective analyte.

16. A method of using a sensor, the method comprising:
exposing a fluid sample to the sensor of claim 1 or any one of claims 1 to 13, or the testing device of claim 14.

## Patentansprüche

1. Sensor, umfassend:
einen photonischen Kristallwellenleiter (9; 52), der einen photonischen Kristall (20; 53) umfasst, der Löcher (11; 54) in einer Schicht (12; 55) aus dielektrischem Material und einen Wellenleiter (13; 57) umfasst, der durch Fehlen von Löchern in dem photonischen Kristall gebildet ist;
mindestens einen Streifen (18; 59₁, 59₂, 59₃) von Biomolekülen, die auf dem photonischen Kristallwellenleiter angeordnet sind, entlang des photonischen Kristallwellenleiters beabstandet sind und über diesen verlaufen, um jeweilige Streifenhohlräume (19; 60₁, 60₂, 60₃) zu bilden, wobei jeder des mindestens einen Streifens eine jeweilige Materialschicht zum Erfassen einer Anwesenheit eines jeweiligen Analyten beinhaltet; und
einen Schlitz (14; 58), der entlang des Wellenleiters (57) des photonischen Kristallwellenleiters (52; 152) verläuft.

2. Sensor nach Anspruch 1, wobei der Schlitz (58) unterschiedliche Breiten entlang des ersten photonischen Wellenleiters aufweist.

3. Sensor nach Anspruch 1 oder 2, wobei der photonische Kristallwellenleiter (9; 52) ein erster photonischer Kristallwellenleiter (52) ist, der mindestens eine Streifen (18; 59₁, 59₂, 59₃) eine Reihe von Streifen (59₁, 59₂, 59₃) umfasst und der Sensor ferner Folgendes umfasst:
einen zweiten photonischen Kristallwellenleiter (62), der entlang des ersten photonischen Kristallwellenleiters verläuft und so vorgesehen ist, dass die Streifenhohlräume an den zweiten photonischen Kristallwellenleiter gekoppelt sind.

4. Sensor, umfassend:
einen ersten photonischen Kristallwellenleiter (52; 152), der einen photonischen Kristall (53; 153) umfasst, der Löcher (54; 154) in einer Schicht (55; 155) aus dielektrischem Material und einen Wellenleiter (57; 157) umfasst, der durch Fehlen von Löchern in dem photonischen Kristall gebildet ist;
eine Reihe von Streifen (59₁, 59₂, 59₃; 159₁, 159₂, 159₃) von Biomolekülen, die auf dem ersten photonischen Kristallwellenleiter angeordnet sind, entlang des photonischen Kristallwellenleiters beabstandet sind und über diesen verlaufen, um jeweilige Streifenhohlräume (60₁, 60₂, 60₃; 160₁, 160₂, 160₃) zu bilden, wobei jeder Streifen eine jeweilige Materialschicht zum Erfassen einer Anwesenheit eines jeweiligen Analyten beinhaltet; und
einen zweiten photonischen Kristallwellenleiter (62; 162), der entlang des ersten photonischen Kristallwellenleiters verläuft und so vorgesehen ist, dass die Streifenhohlräume an den zweiten photonischen Kristallwellenleiter gekoppelt sind.

5. Sensor nach Anspruch 4, wobei der erste photonische Kristallwellenleiter (152) ein photonischer Kristallwellenleiter (152) ohne Schlitze ist.

6. Sensor nach Anspruch 3, 4 oder 5, wobei der zweite photonische Kristallwellenleiter (62; 162) entlang einer Seite des ersten photonischen Kristallwellenleiters (52; 152) verläuft, wobei der erste und zweite photonische Kristallwellenleiter einen gemeinsamen photonischen Kristallabschnitt (65; 165) teilen.

7. Sensor nach Anspruch 3 oder einem der Ansprüche 4 bis 6, ferner umfassend:
einen ersten Koppler (66), der an einem ersten Ende des zweiten photonischen Kristallwellenleiters (62) vorgesehen ist, um Licht von einer externen Quelle in den zweiten photonischen Kristallwellenleiter einzukoppeln; und
einen zweiten Koppler (67), der an einem zweiten Ende des zweiten photonischen Kristallwellenleiters vorgesehen ist, um Licht aus dem zweiten photonischen Kristallwellenleiter zu einem externen Detektor auszukoppeln.

8. Sensor nach Anspruch 7, ferner umfassend:
eine erste Übergangsregion (69), die zwischen dem ersten Koppler und dem ersten Ende des zweiten photonischen Kristalls eingefügt ist; und
eine zweite Übergangsregion (70), die zwischen dem zweiten Ende des zweiten photonischen Kristalls und dem zweiten Koppler eingefügt ist.

9. Sensor nach Anspruch 1 oder einem der Ansprüche 2 bis 8, wobei der Wellenleiter (157₁, 157₂, 157₃) entlang des ersten photonischen Kristallwellenleiters (152) unterschiedliche Breiten aufweist.

10. Sensor nach Anspruch 1 oder einem der Ansprüche 2 bis 9, wobei der photonische Kristall auf einer Seite des ersten photonischen Kristallwellenleiters (152) in mindestens zwei Teilabschnitte (179₁,179₂,179₃) gebrochen ist, die durch mindestens einen Spalt (180₁, 180₂) getrennt sind.

11. Sensor nach Anspruch 1 oder einem der Ansprüche 2 bis 10, wobei jeder Streifen (59₁, 59₂, 59₃; 159₁, 159₂, 159₃) eine jeweilige Dicke zwischen einer und zehn Monoschichten aufweist.

12. Sensor nach Anspruch 1 oder einem der Ansprüche 2 bis 10, wobei jeder Streifen (59₁, 59₂, 59₃; 159₁, 159₂, 159₃) eine jeweilige Dicke zwischen 10 und 100 nm aufweist.

13. Sensor nach Anspruch 12, wobei jeder Streifen (59₁, 59₂, 59₃; 159₁, 159₂, 159₃) eine erste Schicht zum Erzeugen eines jeweiligen Hohlraums und eine zweite Schicht umfasst, die auf der ersten Schicht angeordnet ist, wobei die zweite Schicht die Materialschicht zum Erfassen einer Anwesenheit eines jeweiligen Analyten ist.

14. Testvorrichtung (100), umfassend:
eine Anordnung der Sensoren (50) nach Anspruch 1 oder einem der Ansprüche 2 bis 13, wobei die Sensoren (50) auf einem gemeinsamen Substrat (101) gestützt werden; und
eine mikrofluidische Struktur (102) zum Zuführen einer fluidischen Probe zu den Sensoren.

15. Verfahren zum Bilden eines Sensors, wobei das Verfahren Folgendes umfasst:
• Bereitstellen einer Vorlagenvorrichtung, wobei die Vorlagenvorrichtung Folgendes umfasst:
einen photonischen Kristallwellenleiter (52; 152), der einen photonischen Kristall (20; 53) umfasst, der Löcher (11; 54) in einer Schicht (12; 55) aus dielektrischem Material und einen Wellenleiter (13; 57) umfasst, der durch Fehlen von Löchern in dem photonischen Kristall gebildet ist; und
einen Schlitz (14; 58), der entlang des Wellenleiters (57) des photonischen Kristallwellenleiters (52; 152) verläuft, und
• Drucken mindestens eines Streifens (18; 59₁, 59₂, 59₃) von Biomolekülen auf den photonischen Kristallwellenleiter, der entlang des photonischen Kristallwellenleiters beabstandet ist und über diesen verläuft, um jeweilige Streifenhohlräume (60₁, 60₂, 60₃; 160₁, 160₂, 160₃) zu bilden, wobei jeder Streifen eine jeweilige Materialschicht zum Erfassen einer Anwesenheit eines jeweiligen Analyten beinhaltet.

16. Verfahren zum Verwenden eines Sensors, wobei das Verfahren Folgendes umfasst:
Aussetzen einer Fluidprobe gegenüber dem Sensor nach Anspruch 1 oder einem der Ansprüche 1 bis 13 oder der Testvorrichtung nach Anspruch 14.

## Revendications

1. Capteur comprenant :
un guide d'onde à cristal photonique (9 ; 52) comprenant un cristal photonique (20 ; 53) comprenant des trous (11 ; 54) dans une couche (12 ; 55) de matériau diélectrique et un guide d'onde (13 ; 57) formé par l'absence de trous dans le cristal photonique ;
au moins une bande (18 ; 59₁, 59₂, 59₃) de biomolécules disposée sur le guide d'onde à cristal photonique, espacée le long du guide d'onde à cristal photonique et traversant celui-ci de manière à former des cavités de bande (19 ; 60₁, 60₂, 60₃) respectives, chacune de l'au moins une bande comprenant une couche de matériau respective pour détecter la présence d'un analyte respectif ; et
une fente (14 ; 58) s'étendant le long du guide d'onde (57) du guide d'onde à cristal photonique (52 ; 152).

2. Capteur de la revendication 1, dans lequel la fente (58) présente différentes largeurs le long du premier guide d'onde photonique.

3. Capteur de l'une des revendications 1 ou 2, dans lequel le guide d'onde à cristal photonique (9 ; 52) est un premier guide d'onde à cristal photonique (52), l'au moins une bande (18 ; 59₁, 59₂, 59₃) comprend une série de bandes (59₁, 59₂, 59₃) et le capteur comprend en outre :
un second guide d'onde à cristal photonique (62) s'étendant le long du premier guide d'onde à cristal photonique et agencé de sorte que les cavités de bande soient couplées au second guide d'onde à cristal photonique.

4. Capteur comprenant :
un premier guide d'onde à cristal photonique (52 ; 152) comprenant un cristal photonique (53 ; 153) comprenant des trous (54 ; 154) dans une couche (55 ; 155) de matériau diélectrique et un guide d'onde (57 ; 157) formé par l'absence de trous dans le cristal photonique ;
une série de bandes (59₁, 59₂, 59₃; 159₁, 159₂, 159₃) de biomolécules disposées sur le premier guide d'onde à cristal photonique, espacées les unes des autres et traversant le guide d'onde à cristal photonique de manière à former des cavités de bande (60₁, 60₂, 60₃ ; 160₁, 160₂, 160₃) respectives, chaque bande comprenant une couche de matériau respective pour détecter la présence d'un analyte respectif ; et
un second guide d'onde à cristal photonique (62 ; 162) s'étendant le long du premier guide d'onde à cristal photonique et agencé de sorte que les cavités de bande soient couplées au second guide d'onde à cristal photonique.

5. Capteur de la revendication 4, dans lequel le premier guide d'onde à cristal photonique (152) est un guide d'onde à cristal photonique non fendu (152).

6. Capteur de la revendication 3, 4 ou 5, dans lequel le second guide d'onde à cristal photonique (62 ; 162) s'étend le long d'un côté du premier guide d'onde à cristal photonique (52 ; 152), dans lequel les premier et second guides d'ondes à cristal photonique partagent une partie de cristal photonique commune (65 ; 165).

7. Capteur de la revendication 3 ou l'une quelconque des revendications 4 à 6, comprenant en outre :
un premier coupleur (66) agencé à une première extrémité du second guide d'onde à cristal photonique (62) pour coupler la lumière provenant d'une source externe dans le second guide d'onde à cristal photonique ; et
un second coupleur (67) agencé au niveau d'une seconde extrémité du second guide d'onde à cristal photonique pour coupler la lumière sortant du second guide d'onde à cristal photonique à un détecteur externe.

8. Capteur de la revendication 7, comprenant en outre :
une première région de transition (69) interposée entre le premier coupleur et la première extrémité du second cristal photonique ; et
une seconde région de transition (70) interposée entre la seconde extrémité du second cristal photonique et le second coupleur.

9. Capteur de la revendication 1 ou l'une quelconque des revendications 2 à 8, dans lequel le guide d'onde (157₁, 157₂, 157₃) présente différentes largeurs le long du premier guide d'onde à cristal photonique (152).

10. Capteur de la revendication 1 ou l'une quelconque des revendications 2 à 9, dans lequel, sur un côté du premier guide d'onde à cristal photonique (152), le cristal photonique est divisé en au moins deux sections (179₁, 179₂, 179₃) séparées par au moins un espace (180₁, 180₂).

11. Capteur de la revendication 1 ou l'une quelconque des revendications 2 à 10, dans lequel chaque bande (59₁, 59₂, 59₃ ; 159₁, 159₂, 159₃) présente une épaisseur respective comprise entre une et dix monocouches.

12. Capteur de la revendication 1 ou l'une quelconque des revendications 2 à 10, dans lequel chaque bande (59₁, 59₂, 59₃ ; 159₁, 159₂, 159₃) présente une épaisseur respective comprise entre 10 et 100 nm.

13. Capteur de la revendication 12, dans lequel chaque bande (59₁, 59₂, 59₃ ; 159₁, 159₂, 159₃) comprend une première couche pour créer une cavité respective et une seconde couche disposée sur la première couche, dans lequel la seconde couche est la couche de matériau pour détecter la présence d'un analyte respectif.

14. Dispositif d'essai (100) comprenant :
un réseau de capteurs (50) de la revendication 1 ou l'une quelconque des revendications 2 à 13, les capteurs (50) étant supportés sur un substrat commun (101) ; et
une structure microfluidique (102) destinée à délivrer un échantillon fluidique aux capteurs.

15. Procédé de formation d'un capteur, le procédé comprenant :
• la fourniture d'un dispositif de gabarit, le dispositif de gabarit comprenant :
un guide d'onde à cristal photonique (52 ; 152) comprenant un cristal photonique (20 ; 53) comprenant des trous (11 ; 54) dans une couche (12 ; 55) de matériau diélectrique et un guide d'onde (13 ; 57) formé par l'absence de trous dans le cristal photonique ; et
une fente (14 ; 58) s'étendant le long du guide d'onde (57) du guide d'onde à cristal photonique (52 ; 152) ; et
• l'impression d'au moins une bande (18 ; 59₁, 59₂, 59₃) de biomolécules sur le guide d'onde à cristal photonique, espacée le long du guide d'onde à cristal photonique et traversant celui-ci de manière à former des cavités de bande (60₁, 60₂, 60₃; 160₁, 160₂, 160₃) respectives, chaque bande comprenant une couche de matériau respective pour détecter la présence d'un analyte respectif.

16. Procédé d'utilisation d'un capteur, le procédé comprenant :
l'exposition d'un échantillon de fluide au capteur de la revendication 1 ou l'une quelconque des revendications 1 à 13, ou au dispositif d'essai de la revendication 14.
